# FASCICULE DE BREVET EUROPEEN

(11) **EP 0 940 108 B1**
(45) Date de publication et mention de la délivrance du brevet: **28.05.2003**
(21) Numéro de dépôt: 99400492.7
(22) Date de dépôt: 01.03.1999
(51) Int. Cl.: A47J 27/21

(54) **Procédé pour empecher l'adhérence du tartre sur une surface chauffante en acier inoxydable**
Verfahren zur Verhinderung von Ablagerung von Kesselstein auf Heizflächen aus rostfreiem Stahl
Procedure for preventing scale building on a stainless steel heating surface

(30) Priorité: 04.03.1998 FR 9802634; 14.08.1998 FR 9810437
(43) Date de publication de la demande: 08.09.1999
(73) Titulaire: SEB S.A., 69130 Ecully (FR)
(72) Inventeur: Miquelot, Gilles, 74150 Rumilly (FR); Bertry, Didier, 74150 Massingy (FR)
(74) Mandataire: Keib, Gérard

(56) Documents cités:
- EP-A- 0 333 674
- EP-A- 0 574 310
- EP-A- 0 656 740
- EP-A- 0 870 456
- US-A- 4 147 925

## Description

La présente invention concerne un procédé pour empêcher l'adhérence de tartre sur une surface chauffante en acier inoxydable destinée à être en contact avec l'eau à chauffer dans le récipient d'une bouilloire, d'une cafetière ou d'une théière électrique.

L'avantage de réaliser de telles surfaces chauffantes en acier inoxydable réside dans le fait que cet acier résiste à l'eau chaude et qu'il est de qualité alimentaire contrairement à d'autres métaux.

Cependant, les éléments minéraux contenus dans l'eau chaude finissent par se déposer sur la surface en acier inoxydable en formant une couche de tartre difficile à nettoyer car adhérant fortement à la surface et diminuant le rendement thermique du chauffage lorsque la surface porte une résistance électrique de chauffage.

De plus, la couche de tartre en présence du chlore contenu dans l'eau favorise l'oxydation par piqûres de l'inox, piqûres qui par leur présence génèrent une adhérence plus forte encore du calcaire et diminuent la durée de vie de l'élément chauffant.

Le document EP-A-0 870 456, qui fait part de l'état de la technique au sens de l'article 54(3) CBE, décrit un fond chauffant dont la face supérieure est revêtue d'une couche d'or afin de réduire la formation d'un dépôt de tartre.

Le but de la présente invention est de remédier à l'inconvénient ci-dessus.

Suivant l'invention, le procédé est caractérisé en ce que ladite surface chauffante en acier inoxydable est soumise à un polissage électrolytique.

Le polissage électrolytique de pièces métalliques est bien connu de l'homme du métier. Ce procédé consiste à plonger la surface en acier inoxydable à traiter dans un bain électrolytique et à appliquer une tension entre une électrode et la surface en acier inoxydable. Le courant électrique créé entre les deux électrodes réalise sur la surface en acier inoxydable un polissage à la fois uniforme et fin.

Il a été constaté de façon surprenante que le polissage électrolytique ainsi réalisé rendait la surface chauffante en acier inoxydable, beaucoup moins adhérente vis-à-vis du tartre qu'une surface non traitée ou ayant subi un simple polissage mécanique et protège également l'inox de l'oxydation.

Selon une version préférée de l'invention, ladite surface chauffante est une coupelle en acier inoxydable fixée au fond d'une bouilloire électrique, dont la face opposée à celle destinée à être en contact avec l'eau porte une résistance électrique chauffante.

Dans le cas notamment des bouilloires électriques, la coupelle chauffante en acier inoxydable porte sur sa face opposée à celle destinée à être en contact avec l'eau, soit une résistance blindée fixée par brasage, soit une couche résistive appliquée par sérigraphie.

La cuisson de la couche sérigraphiée à une température de l'ordre de 900°C a pour effet d'oxyder fortement la face de la coupelle destinée à être en contact avec l'eau.

Le polissage électrolytique réalisé selon l'invention a pour effet d'éliminer la couche d'oxyde ci-dessus et de rendre la surface non adhérente vis-à-vis du tartre. L'invention vise également un fond chauffant notamment de bouilloire électrique constitué par une coupelle en acier inoxydable traité selon le procédé ci-dessus.

D'autres particularités et avantages de l'invention apparaîtront encore dans la description ci-après.

Aux dessins annexés donnés à titre d'exemples non limitatifs :
- la figure 1 est une vue en coupe longitudinale partielle d'une bouilloire électrique comportant un fond chauffant traité selon le procédé conforme à l'invention ;
- la figure 2 est un schéma illustrant le procédé de polissage électrolytique.

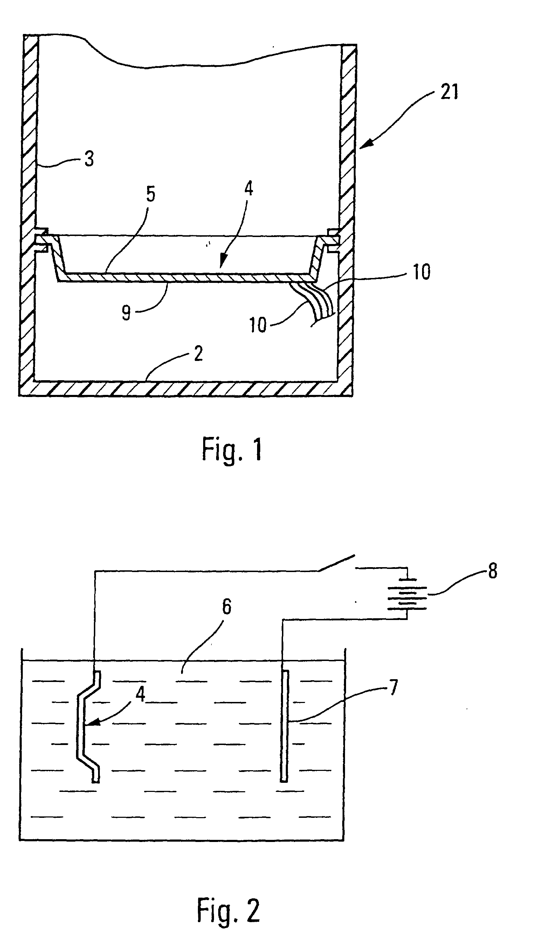

La bouilloire électrique représentée sur la figure 1 comprend un récipient 1 en matière plastique. Près du fond 2 du récipient, la paroi latérale 3 du récipient 1 supporte le bord périphérique d'une coupelle chauffante 4 en acier inoxydable.

Conformément à l'invention, le procédé pour empêcher l'adhérence du tartre sur la face 5 de la coupelle 4 exposée à l'eau à chauffer dans le récipient 1, consiste à soumettre la coupelle 4 en acier inoxydable à un polissage électrolytique.

Comme montré par la figure 2, ce polissage électrolytique consiste à plonger la coupelle 4 en acier inoxydable dans un bain électrolytique 6, à relier cette coupelle 4 et une électrode 7 également plongée dans le bain électrolytique 6 à une source de courant 8.

Dans l'exemple représenté sur la figure 1, la face 9 de la coupelle 4 opposée à la face 5 destinée à être en contact avec l'eau à chauffer porte une couche résistive déposée par sérigraphie. Les extrémités du circuit résistif sont reliées à une source extérieure de courant par des conducteurs 10.

La couche résistive sérigraphiée subit des cuissons à une température de l'ordre de 900°C qui a pour effet d'oxyder fortement la face 5 de la coupelle 4.

Le polissage électrolytique de la coupelle 5 a non seulement pour effet d'éliminer la couche d'oxyde ci-dessus, mais également de rendre la face 5 polie électrolytiquement pratiquement non adhérente vis-à-vis du tartre formé lors des chauffages successifs de l'eau jusqu'à ébullition.

Dans le cas où la face 9 de la coupelle 4 porte une résistance électrique blindée fixée par brasage, le polissage électrolytique de la coupelle 4 peut être réalisé avant fixation par brasage de la résistance blindée.

Selon une autre version de l'invention, l'étape de polissage électrolytique ci-dessus est suivie par une étape d'oxydation à l'air dans un four chauffé à 300°C environ pendant environ 1/4 d'heure.

Cette oxydation a pour effet de créer sur la face 3 du fond chauffant, une fine couche d'oxyde donnant à cette face un aspect «paille» qui renforce les propriétés anti-adhérentes à l'égard du tartre.

Bien entendu, l'invention n'est pas limitée à l'exemple que l'on vient de décrire et on peut apporter à celui-ci de nombreuses modifications dans le cadre des présentes revendications.

Ainsi, le procédé selon l'invention peut être appliqué à toute pièce en acier inoxydable destinée à venir en contact avec l'eau bouillante d'une bouilloire, d'une cafetière ou d'une théière électrique.

## Revendications

1. Procédé pour empêcher l'adhérence de tartre sur une surface chauffante en acier inoxydable (5) destinée à être en contact avec l'eau à chauffer dans le récipient (1) d'une bouilloire, d'une cafetière ou d'une théière électrique, **caractérisé en ce que** ladite surface chauffante (5) en acier inoxydable est soumise à un polissage électrolytique.

2. Procédé conforme à la revendication 1, **caractérisé en ce que** ladite surface chauffante (5) est une coupelle (4) en acier inoxydable fixée au fond d'une bouilloire électrique, dont la face (9) opposée à celle destinée à être en contact avec l'eau porte une résistance électrique chauffante.

3. Procédé conforme à la revendication 2, **caractérisé en ce que** ladite résistance chauffante est appliquée par sérigraphie sur ladite face (9), le polissage électrolytique étant réalisé après cette application par sérigraphie pour éliminer la couche d'oxyde résultant de la cuisson de la couche sérigraphiée.

4. Procédé conforme à l'une des revendications 1 à 3, **caractérisé en ce que** l'étape de polissage est suivie par une étape d'oxydation à l'air dans une enceinte chauffée à 300°C environ.

5. Fond chauffant de bouilloire électrique constitué par une coupelle (4) en acier inoxydable traité selon le procédé conforme à l'une des revendications 1 à 4.

## Patentansprüche

1. Verfahren zur Verhinderung von Ablagerung von Kesselstein auf einer Heizfläche aus rostfreiem Stahl (5), die dafür bestimmt ist, mit dem in dem Behälter (1) eines elektrischen Kochers, einer Kaffeemaschine oder einer Teemaschine aufzuheizenden Wasser in Berührung zu sein, **dadurch gekennzeichnet, dass** die Heizfläche (5) aus rostfreiem Stahl einem elektrolytischen Polieren unterzogen wird.

2. Verfahren gemäß Anspruch 1, **dadurch gekennzeichnet, dass** die Heizfläche (5) aus einer Schale (4) aus rostfreiem Stahl besteht, welche am Boden eines elektrischen Kochers befestigt ist, und deren Fläche (9), die derjenigen gegenüberliegt, die dafür bestimmt ist, mit dem Wasser in Berührung zu seln, einen elektrischen Heizwiderstand trägt.

3. Verfahren gemäß Anspruch 2, **dadurch gekennzeichnet, dass** der Heizwlderstand durch Siebdruck auf die Fläche (9) aufgebracht wird, wobei das elektrolytische Polieren nach diesem Aufbringen durch Siebdruck durchgeführt wird, um die Oxidschicht, die sich durch das Aushärten der durch Siebdruck aufgebrachten Schicht bildet, zu entfemen.

4. Verfahren gemäß einem der Ansprüche 1 bis 3, **dadurch gekennzeichnet, dass** dem Schritt des Polierens ein Oxidationsschritt an der Luft in einem auf ungefähr 300°C erhitzten Behälter folgt.

5. Heizboden eines elektrischen Kochers, der von einer Schale (4) aus rostfreiem Stahl gebildet ist, und der gemäß dem Verfahren gemäß einem der Ansprüche 1 bis 4 behandelt wurde.

## Claims

1. Procedure for preventing scale building up on a stainless steel heating surface (5) designed to be in contact with the water to be heated in the container (1) of an electric kettle, coffee-maker or tea-maker, **characterized in that** the said stainless steel heating surface (5) is subjected to electropolishing.

2. Procedure according to Claim 1, **characterized in that** the said heating surface (5) is a dish (4) made of stainless steel fastened to the base of an electric kettle, whose face (9) opposite that intended to be in contact with the water bears an electrical heating element.

3. Procedure according to Claim 2, **characterized in that** the said heating element is applied by screen printing to the said face (9), the electropolishing being carried out after this application by screen printing in order to remove the oxide layer resulting from baking the screen-printed layer.

4. Procedure according to one of Claims 1 to 3, **characterized in that** the polishing step is followed by an air oxidation step in a chamber heated to about 300°C.

5. Heating base for an electric kettle consisting of a stainless steel dish (4) treated according to the procedure according to one of Claims 1 to 4.
